# EUROPEAN PATENT SPECIFICATION

(11) **EP 2 580 292 B1**
(45) Date of publication and mention of the grant of the patent: **10.10.2018**
(21) Application number: 11746616.9
(22) Date of filing: 10.06.2011
(51) Int. Cl.: C09D 11/00, B42D 15/00, C09C 1/00, C09D 11/02, G07D 7/00

(54) **OPTICAL-EFFECT-PRODUCING MEDIUM, USE THEREOF AND OBJECT HAVING AN OPTICALLY RESPONSIVE FEATURE PRODUCED USING SAID OPTICAL-EFFECT-PRODUCING MEDIUM**
OPTISCHE EFFEKTE PRODUZIERENDES MEDIUM, DIE VERWENDUNG DAVON UND EIN GEGENSTAND, DER EINEN OPTISCHEN EFFEKT AUFWEIST, DER DURCH DAS MEDIUM HERGESTELLT WIRD
MILIEU PRODUISANT UN EFFET OPTIQUE, SON UTILISATION, ET OBJET AYANT UN ÉLÉMENT RÉAGISSANT OPTIQUEMENT PRODUIT À L'AIDE DUDIT MILIEU PRODUISANT UN EFFET OPTIQUE

(30) Priority: 10.06.2010 US 353511 P
(43) Date of publication of application: 17.04.2013
(73) Proprietor: Downing, Elizabeth A., Los Altos Hills, CA 94022 (US); Sheridon, Nicholas K., Sunnyvale, California 94089 (US)
(72) Inventor: Downing, Elizabeth A., Los Altos Hills, CA 94022 (US); Sheridon, Nicholas K., Sunnyvale, California 94089 (US)
(74) Representative: Koenig & Bauer AG
(86) International application number: PCT/IB2011/052535
(87) International publication number: WO 2011/154922

(56) References cited:
- WO-A2-2007/005354
- US-A1- 2008 138 632

## Description

### PREAMBLE / TECHNICAL FIELD

The present invention generally relates to an optical-effect-producing medium of the type comprising a carrier medium containing or comprising pigment particles having at least one optically responsive pigment or dye that responds to incident electromagnetic radiation of at least a selected excitation wavelength or wavelength band by producing an optical response in the visible or near-visible spectrum.

In the context of the present invention, the expression "optical-effect-producing medium" designates any medium that can be printed, transferred, applied, embedded or otherwise provided onto or into a substrate. This in particular includes :
- printing inks, varnishes and like printable materials, especially security printing inks/varnishes as used in the context of the production of security documents, especially banknotes ;
- transfer elements for transfer onto substrates, such as transferrable foils or patches (similar to so-called Optically Variable Devices, or OVD's, as used for application onto security documents like banknotes) ; and
- embeddable elements for incorporation into substrates during the manufacture thereof, such as embeddable threads, fibers or planchettes (as commonly used for the production of security documents such as banknotes).

In the case of printing inks, varnishes and like printable materials, the carrier medium would basically be a binder or vehicle for the pigment particles, which, at the time of printing or varnishing, is in a substantially liquid or pasty state and, following the printing/varnishing operation, is then dried or cured to exhibit a substantially solid state.

In the case of transferrable or embeddable elements, the carrier medium would basically be a substantially solid carrier layer (for example of a suitable polymer material). In the case of transfer elements, the application process would typically involve activation of an adhesive layer provided on the side of the carrier layer (or of any additional layer linked therewith) which is intended to be applied onto the surface of the desired object (for instance on the surface of a security document). In the case of embeddable elements, the elements are directly embedded in the substrate during the manufacture thereof (for instance bonded with the fibers of typical cotton-paper as used for the production of banknotes).

Suitable printing processes (such as intaglio printing, offset printing, silk-screen printing, etc., which are typically used in the security printing industry), application/transfer processes (such hot- or cold-stamping techniques), and embedding processes (such as used in the context of the manufacture of cotton-paper substrates) are known to those skilled in the art and could be used to apply or form the optical-effect producing medium of the instant invention.

### BACKGROUND OF THE INVENTION

Optical-effect-producing mediums are generally known in the art. US 2008/0138632 A1 discloses for example an information carrier precursor comprising a rigid sheet or support; a receiving layer configuration comprising at least one layer; and at least one substance, optionally provided pattern-wise, capable of and available for interacting in situ with at least one species diffusing through the receiving layer configuration to produce a functional species, wherein at least one layer of said receiving layer configuration is opaque, porous, has the capability of being rendered substantially transparent by penetration by a lacquer provided at the outermost surface of said receiving layer configuration and comprises at least one pigment and at least one binder. Preferabbly, the refractive index of said pigment and the refractive index of said lacquer differ by no more than 0,1.

As already mentioned in the preamble hereof, the present invention is directed to a more particular subset of optical-effect-producing mediums, namely optical-effect-producing mediums of the type comprising a carrier medium containing or comprising pigment particles having at least one optically responsive pigment or dye that responds to incident electromagnetic radiation of at least a selected excitation wavelength or wavelength band by producing an optical response in the visible or near-visible spectrum.

In the context of the present invention, it is to be understood that the optically responsive pigment or dye is not directly incorporated into the carrier medium, but rather in distinct pigment particles that are distributed in the carrier medium. The optical-effect producing medium which forms the subject-matter of the instant application is therefore of the type comprising at least two constituents, namely the carrier medium and the pigment particles, each pigment particle constituting a platform or system carrying the optically responsive pigment or dye. The main advantage of such a configuration is that the pigment particles can be suitably designed to protect the optically responsive pigment or dye from external factors and influences. Such a configuration further guarantees that the optically responsive pigment or dye stays and remains in a locally-stable environment contained within each pigment particle.

Pigment particles as mentioned hereinabove are for instance disclosed and discussed in International Publication No. WO 2007/005354 A2, which is incorporated herein by reference in its entirety. In that context, the pigment particles can in particular be single-layer or multi-layered particles.

### SUMMARY OF THE INVENTION

A general aim of the invention is to provide an optical-effect-producing medium of the above-mentioned type where the performance of the optically responsive pigment or dye is optimized.

More specifically, an aim of the invention is to provide such an optical-effect-producing medium where the performance of the optically responsive pigment or dye is not degraded by factors such as the surrounding materials used for the carrier medium and the pigment particles, especially the optical characteristics thereof.

These aims are achieved thanks to the optical-effect-producing medium as defined in the appended claims.

There is accordingly provided an optical-effect-producing medium comprising a carrier medium containing or comprising pigment particles having at least one optically responsive pigment or dye that responds to incident electromagnetic radiation of at least a selected excitation wavelength or wavelength band by producing an optical response in the visible or near-visible spectrum, wherein a refractive index of the carrier medium and a refractive index of the pigment particles are selected to maximise the amount of incident electromagnetic radiation reaching the said at least one optically responsive pigment or dye.

Advantageous embodiments of the above optical-effect-producing medium form the subject-matter of the dependent claims.

Also claimed is the use of the above optical-effect-producing medium to produce an optically responsive feature, especially for security, authentication and/or identification purposes.

In that respect, there is further provided an object comprising a substrate and at least one optically responsive feature printed, transferred, applied, embedded or otherwise provided onto or into the substrate, which optically responsive feature is produced using the above-mentioned optical-effect-producing medium.

There is also provided an object comprising a substrate, an under-layer provided onto a surface of the substrate, and at least one optically responsive feature printed, transferred, applied or otherwise provided onto the under-layer, which optically responsive feature is produced using the above-mentioned optical-effect-producing medium.

Advantageous embodiments of the above objects form the subject-matter of the dependent claims.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figure 1 is a schematic cross-sectional view of an optical-effect-producing medium according to an embodiment of the invention where the pigment particles (only one such pigment particle being illustrated in the Figure) are multilayered pigment particles comprising an inner core material that is encased in at least one membrane or shell, which inner core material contains or comprises the at least one optically responsive pigment or dye;
Figure 2 is a schematic cross-sectional view of an object, namely a security document, provided with an optically responsive feature, which feature is produced using an optical-effect-producing medium in accordance with Figure 1 ;
Figure 3 is a schematic view illustrating various examples of pigment particles according to a further embodiment of the invention where sub-particles are further incorporated in the inner core material ;
Figure 4 is a schematic view illustrating various examples of pigment particles according to a further embodiment of the invention where sub-particles are further incorporated in the membrane or shell; and
Figure 5 is a schematic view illustrating various examples of optical-effect-producing mediums according to a further embodiment of the invention where sub-particles are further incorporated in the carrier medium surrounding the pigment particles.

### DETAILED DESCRIPTION OF EMBODIMENTS OF THE INVENTION

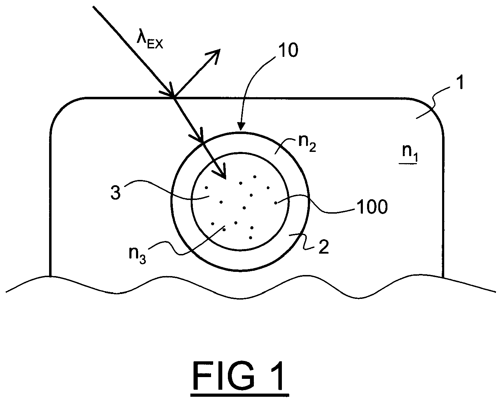

Reference is made to Figure 1 which is a schematic cross-sectional view of an optical-effect-producing medium according to an embodiment of the invention where the pigment particles (only one such pigment particle designated by reference numeral 10 is illustrated in Figure 1) are multilayered pigment particles comprising an inner core material 3 that is encased in a membrane or shell 2, which inner core material 3 contains or comprises at least one optically responsive pigment or dye designated generally by reference numeral 100.

The pigment particles 10 are substantially spherical pigment particles having a mean particle diameter of the order of a few microns or tenths of microns, preferably of the order of 0.1 to 10 microns. Such multilayered pigment particles can in particular be micro-encapsulated particles produced using suitable micro-encapsulation techniques. In this context, the inner core material 3 could advantageously be liquid at ambient temperature.

While Figure 1 shows a single membrane or shell 2, it should be appreciated that two or more membranes or shells may be provided around the inner core material 3.

As schematically illustrated in Figure 1, the optical-effect-producing medium comprises a carrier medium 1 which contains or comprises the pigment particles 10.

A particularly advantageous practical implementation of the optical-effect-producing medium can be in the form a printing ink, varnish or like printable material. In such case, as already mentioned in the preamble part hereof, the carrier medium 1 would basically be a binder or vehicle for the pigment particles, which, at the time of printing, is in a substantially liquid or pasty state and, following printing, is then dried or cured to exhibit a substantially solid state. Suitable examples could be intaglio printing inks, offset printing inks, silk-screen printing inks or varnishes as used in flexographic or offset printing processes. The specific nature of the binder or vehicle depends on the relevant practical application and the ink/varnish properties. In the case of water-based or solvent-based inks/varnishes, the binder or vehicle would contain at least one solvent (for instance water) that would be evaporated during a drying process following the printing operation. In the case of UV-cured inks/varnishes, the binder or vehicle would contain at least one UV-activated curing substance that would be activated by UV radiation following the printing operation to typically initiate polymerisation of the binder or vehicle. So-called oxidative (or oxidatively curing) inks/varnishes are also contemplated. In this latter case, the binder or vehicle contains an oxidative polymerisation agent which reacts to exposure to air oxygen to initiate the polymerisation process.

Alternately, the optical-effect-producing medium could take the form of a transfer element or an embeddable element comprising a carrier layer acting as the carrier medium 1. Transfer elements may in particular be foils, patches, and like transfer elements that can be transferred onto a substrate by foil stamping techniques, such as hot-stamping and cold-stamping techniques. Embeddable elements may in particular be threads, fibers, planchettes, and like embeddable elements that can be incorporated into a substrate during the manufacture thereof.

In the context of the invention, the main property of the carrier medium 1 that one is particularly concerned with is the particular refractive index of the carrier medium 1 that will be designated hereinafter as refractive index n₁.

Similarly, a property that plays a role in the context of the invention is a refractive index of the pigment particles. In the case of Figure 1 where the pigment particles each comprise an inner core material 3 and an outer membrane or shell 2, one shall refer to refractive indexes n₂ and n₃ as the refractive indexes of the membrane or shell 2 and of the inner core material 3, respectively.

The optically responsive pigment or dye 100, which in this case is contained within the inner core material 3, can be any suitable pigment or dye that responds to incident electromagnetic radiation of a selected excitation wavelength(s) or wavelength band(s) λ_{EX} by producing an optical response in the visible or near-visible spectrum. The following pigments or dyes are in particular contemplated (the following list being however non-exhaustive) :
- fluorescent pigments or dyes that absorb incident electromagnetic radiation (including but not limited to excitation in the UV range) and respond by an emission of a same or longer wavelength or wavelength band (including but not limited to emissions in the visible or near-visible spectrum) ; and
- photochromic pigments or dyes that respond to incident electromagnetic radiation, especially in the UV range, by undergoing a reversible change in visible color, absorption, or transparency.

According to the invention, the refractive index n₁ of the carrier medium 1 and the refractive index (or indexes) n₂, n₃ of the pigment particles 10 are selected to maximise the amount of incident electromagnetic radiation reaching the optically responsive pigment or dye 100.

In the context of a printing ink, varnish or like printable material comprising a binder or vehicle acting as the carrier medium 1, the binder or vehicle undergoes a change of state (namely from a liquid or pasty state to a substantially solid state) as a result of the curing or drying process that typically takes place following the printing operation. What matters is therefore the refractive index n₁ of the binder or vehicle in a cured or dried state.

Maximization of the amount of incident electromagnetic radiation reaching the optically responsive pigment or dye 100 is achieved by substantially matching the relevant refractive indexes for the selected excitation wavelength or wavelength band λ_{EX} of the incident electromagnetic radiation. It should be appreciated that the refractive index of materials is dependent on the relevant wavelength being considered. In particular, the refractive index of various materials is typically greater at wavelengths in the UV range as compared to the refractive index in the visible spectrum. One should therefore suitably take into account the relevant excitation wavelength (or wavelength band) λ_{EX} when matching the relevant refractive indexes of the various constituents of the optical-effect-producing medium.

Tests have shown that slight differences between the relevant refractive indexes may be tolerated in practice. According to the invention, an absolute difference between the refractive indexes is below 0.5, even more preferably below 0.1.

Tests carried out with an optical-effect-producing medium of the type illustrated schematically in Figure 1 where the pigment particles are two-layer particles with an outer membrane or shell 2 and an inner core material 3 with corresponding refractive indexes n₂ and n₃ have shown that it may suffice to match the refractive index n₂ of the outer membrane or shell 2 with the refractive index n₁ of the carrier medium 1. A further match of the refractive index n₃ of the inner core material with the other refractive indexes n₁ and n₂ may however further help to optimize the overall performance of the optical-effect-producing medium.

Maximization of the amount of incident electromagnetic radiation reaching the optically responsive pigment or dye 100 is further achieved by ensuring that the carrier medium 1 is substantially transparent at the selected excitation wavelength or wavelength band λ_{EX} to prevent absorption of the incident electromagnetic radiation in the carrier medium 1 itself.

A way to adjust the refractive index of any relevant constituent of the optical-effect-producing medium consists in incorporating a suitable additive in the said constituent to change its nominal refractive index and adjust it to the desired refractive index. A possible additive is in particular be titanium dioxide (TiO₂) sub-particles, on the order of 1 micron or less in mean particle diameter (more preferably less that 100 nm), or like high refractive index additives. Titanium dioxide has a relatively high refractive index (of approx. 2,4 to 2.8) which is higher than that of most materials. Any other suitable additive could however be used.

In the same way, it is appropriate to use a visible light absorbing additive, such as carbon black sub-particles, to reduce scattering of visible light within the optical-effect-producing medium.

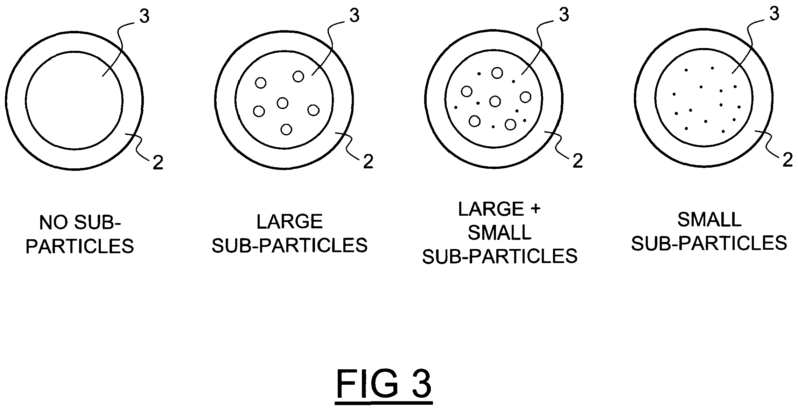

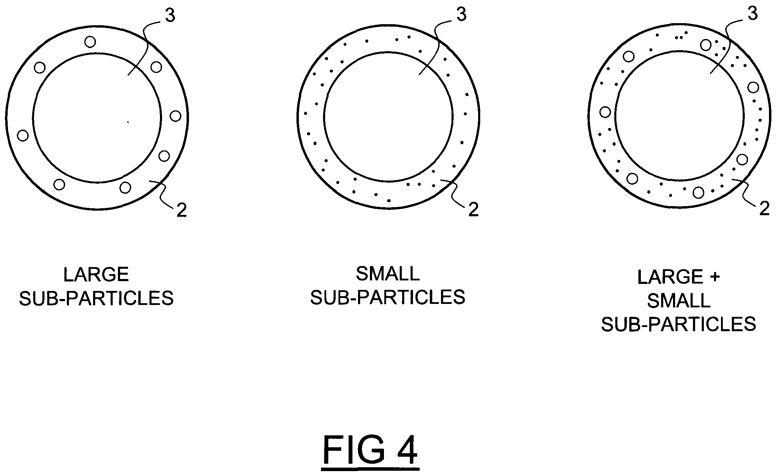

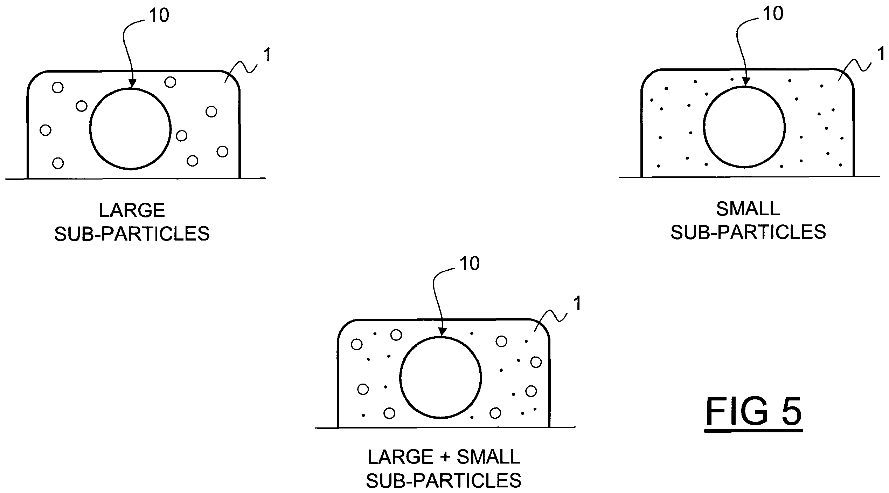

The above-mentioned additives could be incorporated in either one of the various constituents of the optical-effect-producing medium, and in various subparticle sizes (small, large or a combination thereof), for instance in the inner core material 3 (see Figure 3), in the membrane or shell 2 (see Figure 4), and/or in the carrier medium 1 (see Figure 5).

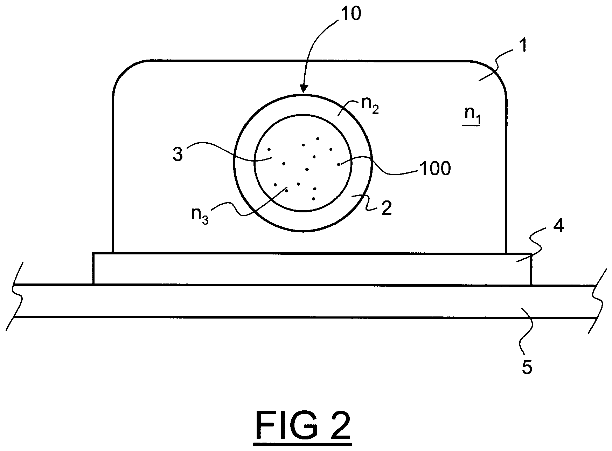

Turning now to Figure 2, one will explain a possible use of the above-discussed optical-effect-producing medium to produce an optically responsive feature, especially for security, authentication and/or identification purposes.

Figure 2 is a schematic cross-sectional view of an object, namely of a security document, provided with an optically responsive feature, which feature is produced using an optical-effect-producing medium in accordance with Figure 1. The same reference numerals as in Figure 1 are used in Figure 2 to designate the same constituents that have already been discussed in reference to Figure 1, which constituents will not accordingly be discussed again.

Figure 2 further shows a substrate 5 (such as for instance a cotton-paper substrate as used for producing banknotes) on the upper surface of which there is provided an under-layer 4. The optically responsive feature produced using the above-discussed optical-effect-producing medium is formed on top of the under-layer 4. The under-layer 4 may be printed, transferred, applied or otherwise provided onto the surface of the substrate 5. A suitable solution would be to print the under-layer 4, for instance by offset printing.

Depending on the nature of the under-layer 4, various effects and results could be obtained.

For instance, the under-layer 4 may be a broad-band absorbing layer designed to absorb most of the visible spectrum, such as a dark-colored, preferably black, layer. In this way, and assuming that the incident electromagnetic radiation used to activate the optically responsive pigment or dye is white light (or like broad-band visible radiation), the under-layer 4 would absorb most of this light and prevent scattering of light and reflection thereof which could otherwise be produced at the surface of the underlying substrate 5.

The under-layer 4 may alternately be a narrow-band absorbing layer absorbing only part of the visible spectrum, such as colored layer. In this way, the under-layer 4 could help to prevent scattering and/or reflection of light within the said narrow band that could impact on the desired performance or optical effect of the optically responsive feature.

Still in the same way, the under-layer 4 could be a broad-band reflective layer reflecting most of the visible spectrum, such as a bright-colored, preferably white, layer.

A further measure to prevent scattering of light may consist in ensuring that the exposed surface of the optically responsive feature at the interface between air and the carrier medium 1 exhibits a substantially flat and smooth surface.

Various modifications and/or improvements may be made to the above-described embodiments without departing from the scope of the invention as defined by the appended claims. For instance, the pigment particles may be single-layer (or monolithic) particles or may comprise two or more membranes or shells, rather than one as illustrated in Figures 1 to 4. The invention is obviously not limited to optical-effect-producing mediums comprising only one type of pigment particles. Combinations of various pigments or dyes within the pigment particles could also be envisaged. An example of which could be the use of narrow-band absorbing dyes to preferentially absorb narrow bands of light from the excitation wavelength(s) or wavelength band(s).

### LIST OF REFERENCES USED IN THE FIGURES AND SPECIFICATION

- 1: carrier medium / binder or vehicle (printing ink, varnish or like printable materials) / carrier layer (transfer or embeddable elements)
- 10: pigment particle
- 2: outer membrane or shell of pigment particle 10 (preferred embodiment)
- 3: inner core material of pigment particle 10 (preferred embodiment)
- 100: optically responsive pigment or dye within pigment particle 10
- n₁: refractive index of carrier medium 1
- n₂: refractive index of outer membrane or shell 2
- n₃: refractive index of inner core material 3
- λ_{EX}: excitation wavelength (or wavelength band) of incident electromagnetic radiation
- 4: under-layer
- 5: substrate

## Claims

1. An optical-effect-producing medium comprising a carrier medium (1) containing or comprising pigment particles (10) having at least one optically responsive pigment or dye (100) that responds to incident electromagnetic radiation of at least a selected excitation wavelength or wavelength band (λ_{EX}) by producing an optical response in the visible or near-visible spectrum,
wherein a refractive index (n₁) of the carrier medium (1) and a refractive index (n₂; n₃) of the pigment particles (10) are selected to maximise the amount of incident electromagnetic radiation reaching the said at least one optically responsive pigment or dye (100),
**characterized in that** said pigment particles (10) are multilayered pigment particles comprising an inner core material (3) that is encased in at least one membrane or shell (2), which inner core material (3) contains or comprises said at least one optically responsive pigment or dye (100), wherein the selected refractive index of the pigment particles at least includes a refractive index (n₂) of said membrane or shell (2), wherein the selected refractive index of the pigment particles also includes a refractive index (n₃) of said inner core material (3),
wherein said refractive indexes (n₁; n₂; n₃) are selected in such a way as to substantially match each other at the said at least selected excitation wavelength or wavelength band (λ_{EX}) of the incident electromagnetic radiation, said refractive indexes (n₁; n₂; n₃) being selected so that an absolute difference between said refractive indexes (n₁; n₂; n₃) is below 0.5,
wherein said carrier medium (1) is substantially transparent at the said at least selected excitation wavelength or wavelength band (λ_{EX}),
further comprising an additive to adjust at least one of said refractive indexes (n₁; n₂; n₃), said additive including titanium dioxide (TiO₂) sub-particles having a mean particle diameter of 1 µm or less,
and further comprising a visible light absorbing additive to reduce scattering of visible light within the optical-effect-producing medium, said visible light absorbing additive being carbon black sub-particles.

2. The optical-effect-producing medium according to claim 1, wherein said optical-effect-producing medium is a printing ink, varnish or like printable material, comprising a binder or vehicle acting as said carrier medium (1),
and wherein the refractive index (n₁) of the carrier medium is the refractive index of the binder or vehicle in a cured or dried state.

3. The optical-effect-producing medium according to claim 1, wherein said optical-effect-producing medium is a transfer element or an embeddable element comprising a carrier layer acting as said carrier medium (1),
the transfer element being selected from the group comprising foils, patches, and like transfer elements that can be transferred onto a substrate by foil stamping techniques, including hot-stamping and cold-stamping techniques,
and the embeddable element being selected from the group comprising threads, fibers, planchettes, and like embeddable elements that can be incorporated into a substrate during manufacture thereof.

4. The optical-effect-producing medium according to any one of the preceding claims, wherein said inner core material (3) is liquid at ambient temperature.

5. The optical-effect-producing medium according to any one of the preceding claims, wherein said refractive indexes (n₁; n₂; n₃) are selected so that an absolute difference between said refractive indexes (n₁; n₂; n₃) is below 0.1.

6. The optical-effect-producing medium according to any one of the preceding claims, wherein said at least one optically responsive pigment or dye (100) is selected from the group comprising:
- fluorescent pigments or dyes that absorb incident electromagnetic radiation and respond by an emission in a same or longer wavelength or wavelength band ; and
- photochromic pigments or dyes that respond to incident electromagnetic radiation by undergoing a reversible change in visible color, absorption, or transparency.

7. The optical-effect-producing medium according to any one of the preceding claims, wherein said titanium dioxide (TiO₂) sub-particles have a mean particle diameter of 100 nm or less.

8. The optical-effect-producing medium according to any one of the preceding claims, further comprising narrow-band absorbing dyes to absorb at least one narrow band of the said at least selected excitation wavelength or wavelength band (λ_{EX}).

9. The optical-effect-producing medium according to any one of the preceding claims, wherein said pigment particles (10) are substantially spherical pigment particles having a mean particle diameter of the order of 0.1 to 10 µm.

10. The optical-effect-producing medium according to any one of the preceding claims, wherein said pigment particles (10) are micro-encapsulated pigment particles.

11. Use of the optical-effect-producing medium according to any one of the preceding claims to produce an optically responsive feature for security, authentication and/or identification purposes.

12. An object comprising a substrate (5) and at least one optically responsive feature printed, transferred, applied, embedded or otherwise provided onto or into said substrate (5), which optically responsive feature is produced using the optical-effect-producing medium according to any one of claims 1 to 10.

13. An object comprising a substrate (5), an under-layer (4) provided onto a surface of said substrate (5), and at least one optically responsive feature printed, transferred, applied or otherwise provided onto said under-layer (4), which optically responsive feature is produced using the optical-effect-producing medium according to any one of claims 1 to 10.

14. The object according to claim 13, wherein said under-layer (4) is either:
- a broad-band absorbing layer absorbing most of the visible spectrum, such as a dark-colored, preferably black layer;
- a narrow-band absorbing layer absorbing only part of the visible spectrum, such as colored layer; or
- a broad-band reflective layer reflecting most of the visible spectrum, such as a bright-colored, preferably white layer.

15. The object according to any one of claims 12 to 14, wherein an exposed surface of said optically responsive feature at the interface between air and the carrier medium (1) exhibits a substantially flat and smooth surface.

16. The object according to any one of claims 12 to 15, wherein said object is a banknote.

## Patentansprüche

1. Optischen Effekt erzeugendes Medium, umfassend ein Trägermedium (1), enthaltend oder umfassend Pigmentteilchen (10) mit mindestens einem optisch responsivem Pigment oder einem optisch responsivem Farbstoff (100), das bzw. der auf einfallende elektromagnetische Strahlung von mindestens einer ausgewählten Anregungswellenlänge oder eines Wellenlängenbands (λ_{EX}) durch Erzeugen einer optischen Antwort im sichtbaren oder nahezu sichtbaren Spektrum reagiert,
wobei ein Brechungsindex (n₁) des Trägermediums (1) und ein Brechungsindex (n₂; n₃) der Pigmentpartikel (10) für ein Maximieren der Menge der einfallenden elektromagnetischen Strahlung, die das bzw. den mindestens eine optisch responsive Pigment oder Farbstoff (100) erreicht, gewählt werden,
**dadurch gekennzeichnet, dass** die Pigmentpartikel (10) mehrschichtige Pigmentteilchen sind, die ein inneres Kernmaterial (3) umfassen, das in mindestens einer Membran oder Schale (2) eingeschlossen ist, wobei das innere Kernmaterial (3) mindestens ein optisch responsives Pigment oder einen optisch responsiven Farbstoff (100) enthält oder umfasst, wobei der ausgewählte Brechungsindex der Pigmentteilchen mindestens einen Brechungsindex (n₂) der Membran oder Schale (2) enthält, wobei der ausgewählte Brechungsindex der Pigmentteilchen auch einen Brechungsindex (n₃) des inneren Kernmaterials (3) enthält,
wobei die Brechungsindizes (n₁; n₂; n₃) derart ausgewählt sind, dass sie im Wesentlichen bei der mindestens einen ausgewählten Anregungswellenlänge oder dem Wellenlängenband (λ_{EX}) der einfallenden elektromagnetischen Strahlung miteinander übereinstimmen, wobei die Brechungsindizes (n₁; n₂; n₃) derart ausgewählt sind, dass eine absolute Differenz zwischen den Brechungsindizes (n₁; n₂; n₃) unter 0,5 liegt,
wobei das Trägermedium (1) im Wesentlichen bei der mindestens ausgewählten Anregungswellenlänge oder dem Wellenlängenband (λ_{EX}) durchsichtig ist,
ferner umfassend einen Zusatzstoff zum Einstellen mindestens eines der Brechungsindizes (n₁; n₂; n₃), wobei der Zusatzstoff Titandioxid-(TiO₂)-Subpartikel mit einem mittleren Partikeldurchmesser von 1 µm oder weniger umfasst,
und ferner umfassend einen Licht absorbierenden Zusatzstoff zum Reduzieren der Streuung von sichtbarem Licht innerhalb des den optischen Effekt erzeugenden Mediums, wobei der Licht absorbierende Zusatzstoff Ruß-Subpartikel sind.

2. Optischen Effekt erzeugendes Medium nach Anspruch 1, wobei das den optischen Effekt erzeugende Medium eine Druckfarbe, ein Lack oder ein ähnliches bedruckbares Material ist, umfassend ein Bindemittel oder Vehikel, das als das Trägermedium (1) wirkt,
und wobei der Brechungsindex (n₁) des Trägermediums der Brechungsindex des Bindemittels oder des Vehikels in einem gehärteten oder getrockneten Zustand ist.

3. Optischen Effekt erzeugendes Medium nach Anspruch 1, wobei das den optischen Effekt erzeugende Medium ein Transferelement oder ein einbettbares Element ist, das eine Trägerschicht umfasst, die als das Trägermedium (1) wirkt, wobei das Transferelement ausgewählt ist aus der Gruppe umfassend Folien, Flicken und ähnliche Transferelemente, die durch Folienstanztechniken, einschließlich Heißprägen und Kaltprägen, auf ein Substrat übertragen werden können,
und wobei das einbettbare Element ausgewählt ist aus der Gruppe umfassend Fäden, Fasern, Planchetten und ähnliche einbettbare Elemente, die in ein Substrat während dessen Herstellung eingebracht werden können.

4. Optischen Effekt erzeugendes Medium nach einem der vorhergehenden Ansprüche, wobei das innere Kernmaterial (3) bei Umgebungstemperatur flüssig ist.

5. Optischen Effekt erzeugendes Medium nach einem der vorhergehenden Ansprüche, wobei die Brechungsindizes (n₁; n₂; n₃) so ausgewählt sind, dass eine absolute Differenz zwischen den Brechungsindizes (n₁; n₂; n₃) unter 0,1 liegt.

6. Optischen Effekt erzeugendes Medium nach einem der vorhergehenden Ansprüche, wobei das mindestens eine optisch responsive Pigment oder der mindestens eine optisch responsive Farbstoff (100) ausgewählt ist aus der Gruppe umfassend:
- fluoreszierende Pigmente oder Farbstoffe, die einfallende elektromagnetische Strahlung absorbieren und durch eine Emission in einer gleichen oder längeren Wellenlänge oder einem gleichen oder längeren Wellenlängenband reagieren; und
- photochrome Pigmente oder Farbstoffe, die auf einfallende elektromagnetische Strahlung reagieren, indem sie eine reversible Änderung der sichtbaren Farbe, Absorption oder Transparenz erfahren.

7. Optischen Effekt erzeugendes Medium nach einem der vorhergehenden Ansprüche, wobei die Titandioxid-(TiO₂)-Subpartikel einen mittleren Partikeldurchmesser von 100 nm oder weniger aufweisen.

8. Optischen Effekt erzeugendes Medium nach einem der vorhergehenden Ansprüche, ferner umfassend schmalbandig absorbierende Farbstoffe zum Absorbieren mindestens eines schmalen Bands der mindestens ausgewählten Anregungswellenlänge oder des Wellenlängenbands (λ_{EX}).

9. Optischen Effekt erzeugendes Medium nach einem der vorhergehenden Ansprüche, wobei die Pigmentteilchen (10) im Wesentlichen kugelförmige Pigmentteilchen mit einem mittleren Teilchendurchmesser in der Größenordnung von 0,1 bis 10 µm sind.

10. Optischen Effekt erzeugendes Medium nach einem der vorhergehenden Ansprüche, wobei die Pigmentteilchen (10) mikroverkapselte Pigmentteilchen sind.

11. Anwenden des einen optischen Effekt erzeugenden Mediums nach einem der vorhergehenden Ansprüche zum Erzeugen eines optisch responsiven Merkmals für Sicherheits-, Authentifizierungs- und/oder Identifikationszwecke.

12. Gegenstand, umfassend ein Substrat (5) und mindestens ein optisch responsives Merkmal, das auf dem oder in das Substrat (5) gedruckt, übertragen, aufgebracht, eingebettet oder auf andere Weise bereitgestellt ist, wobei das optisch responsive Merkmal unter Verwendung des einen optischen Effekt erzeugenden Mediums nach einem der Ansprüche 1 bis 10 hergestellt wird.

13. Gegenstand, umfassend ein Substrat (5), eine auf einer Oberfläche des Substrats (5) bereitgestellte Unterschicht (4) und mindestens ein optisch responsives Merkmal, das auf die Unterschicht (4) aufgedruckt, übertragen, aufgebracht oder anderweitig bereitgestellt ist, wobei das optisch responsive Merkmal unter Verwendung des einen optischen Effekt erzeugenden Mediums nach einem der Ansprüche 1 bis 10 hergestellt wird.

14. Gegenstand nach Anspruch 13, wobei die Unterschicht (4) entweder
- eine breitbandige Absorptionsschicht ist, die den größten Teil des sichtbaren Spektrums absorbiert, wie eine dunkelfarbige, vorzugsweise schwarze Schicht; oder
- eine schmalbandige Absorptionsschicht ist, die nur einen Teil des sichtbaren Spektrums absorbiert, wie beispielsweise eine farbige Schicht; oder
- eine breitbandige reflektierende Schicht ist, die den größten Teil des sichtbaren Spektrums reflektiert, wie eine hellfarbige, vorzugsweise weiße, Schicht.

15. Gegenstand nach einem der Ansprüche 12 bis 14, wobei eine freiliegende Oberfläche des optisch responsiven Merkmals an der Grenzfläche zwischen Luft und dem Trägermedium (1) eine im Wesentlichen flache und glatte Oberfläche aufweist.

16. Gegenstand nach einem der Ansprüche 12 bis 15, wobei das Objekt eine Banknote, ist.

## Revendications

1. Moyen de production d'effet optique qui comprend un moyen de support (1) qui contient ou comprend des particules de pigment (10) qui ont au moins un pigment ou colorant sensible optiquement (100) qui réagit à un rayonnement électromagnétique incident d'au moins une longueur d'onde ou bande de longueur d'onde (λ_{EX}) d'excitation sélectionnée en produisant une réponse optique dans le spectre visible ou proche visible,
dans lequel un indice de réfraction (n₁) du moyen de support (1) et un indice de réfraction (n₂; n₃) des particules de pigment (10) sont sélectionnés pour augmenter à un maximum la quantité de rayonnement électromagnétique incident qui atteint ledit au moins un pigment ou colorant sensible optiquement (100),
**caractérisé en ce que** lesdites particules de pigment (10) sont des particules de pigment à couches multiples qui comprennent un matériau de noyau intérieur (3) qui est recouvert d'au moins une membrane ou enveloppe (2), lequel matériau de noyau intérieur (3) contient ou comprend ledit au moins un pigment ou colorant sensible optiquement (100), dans lequel l'indice de réfraction sélectionné des particules de pigment comprend au moins un indice de réfraction (n₂) de ladite membrane ou enveloppe (2), dans lequel l'indice de réfraction sélectionné des particules de pigment comprend également un indice de réfraction (n₃) dudit matériau de noyau intérieur (3),
dans lequel lesdits indices de réfraction (n₁; n₂; n₃) sont sélectionnés de manière à correspondre sensiblement les uns aux autres à ladite au moins une longueur d'onde ou bande de longueur d'onde (λ_{EX}) d'excitation sélectionnée du rayonnement électromagnétique incident, dans lequel lesdits indices de réfraction (n₁; n₂; n₃) sont sélectionnés de sorte qu'une différence absolue entre lesdits indices de réfraction (n₁; n₂; n₃) soit inférieure à 0,5,
dans lequel ledit moyen de support (1) est sensiblement transparent à ladite au moins une longueur d'onde ou bande de longueur d'onde (λ_{EX}) d'excitation sélectionnée,
qui comprend en outre un additif pour ajuster au moins l'un desdits indices de réfraction (n₁; n₂; n₃), dans lequel ledit additif comprend des sous-particules de dioxyde de titane (TiO₂) avec un diamètre de particule moyen de 1 µm ou moins, et qui comprend en outre un additif absorbant la lumière visible pour réduire la dispersion de la lumière visible dans le moyen de production d'effet optique, dans lequel ledit additif absorbant la lumière visible consiste en des sous-particules de noir de carbone.

2. Moyen de production d'effet optique selon la revendication 1, dans lequel ledit moyen de production d'effet optique est une encre d'impression, un vernis ou un matériau imprimable similaire, qui comprend un liant ou un véhicule qui agit en tant que dit moyen de support (1),
et dans lequel l'indice de réfraction (n₁) du moyen de support est l'indice de réfraction du liant ou du véhicule dans un état cuit ou séché.

3. Moyen de production d'effet optique selon la revendication 1, dans lequel ledit moyen de production d'effet optique est un élément de transfert ou un élément intégrable qui comprend une couche de support qui agit en tant que dit moyen de support (1),
dans lequel l'élément de transfert est sélectionné dans le groupe comprenant des feuilles, des pastilles, et des éléments de transfert similaires qui peuvent être transférés sur un substrat par des techniques d'estampage de feuille, qui comprennent des techniques d'estampage à chaud et d'estampage à froid,
et dans lequel l'élément intégrable est sélectionné dans le groupe comprenant des fils, des fibres, des planchettes, et des éléments intégrables similaires qui peuvent être incorporés dans un substrat pendant la fabrication de celui-ci.

4. Moyen de production d'effet optique selon l'une quelconque des revendications précédentes, dans lequel ledit matériau de noyau intérieur (3) est un liquide à température ambiante.

5. Moyen de production d'effet optique selon l'une quelconque des revendications précédentes, dans lequel lesdits indices de réfraction (n₁; n₂; n₃) sont sélectionnés de sorte qu'une différence absolue entre lesdits indices de réfraction (n₁; n₂; n₃) soit inférieure à 0,1.

6. Moyen de production d'effet optique selon l'une quelconque des revendications précédentes, dans lequel ledit au moins un pigment ou colorant sensible optiquement (100) est sélectionné dans le groupe comprenant :
- des pigments ou colorants fluorescents qui absorbent un rayonnement électromagnétique incident et qui réagissent par une émission à une même longueur d'onde ou bande de longueur d'onde ou à une longueur d'onde ou bande de longueur d'onde plus longue ; et
- des pigments ou colorants photochromiques qui réagissent à un rayonnement électromagnétique incident en subissant un changement réversible de couleur visible, d'absorption, ou de transparence.

7. Moyen de production d'effet optique selon l'une quelconque des revendications précédentes, dans lequel lesdites sous-particules de dioxyde de titane (TiO₂) ont un diamètre de particule moyen de 100 nm ou moins.

8. Moyen de production d'effet optique selon l'une quelconque des revendications précédentes, qui comprend en outre des pigments d'absorption de bande étroite pour absorber au moins une bande étroite de ladite au moins une longueur d'onde ou bande de longueur d'onde (λ_{EX}) d'excitation sélectionnée.

9. Moyen de production d'effet optique selon l'une quelconque des revendications précédentes, dans lequel lesdites particules de pigment (10) sont des particules de pigment sensiblement sphériques avec un diamètre de particule moyen de l'ordre de 0,1 à 10 µm.

10. Moyen de production d'effet optique selon l'une quelconque des revendications précédentes, dans lequel lesdites particules de pigment (10) sont des particules de pigment micro-encapsulées.

11. Utilisation du moyen de production d'effet optique selon l'une quelconque des revendications précédentes pour produire une caractéristique sensible optiquement à des fins de sécurité, d'authentification et/ou d'identification.

12. Objet qui comprend un substrat (5) et au moins une caractéristique sensible optiquement imprimée, transférée, appliquée, intégrée ou autrement prévue sur ou dans ledit substrat (5), laquelle caractéristique sensible optiquement est produite en utilisant le moyen de production d'effet optique selon l'une quelconque des revendications 1 à 10.

13. Objet qui comprend un substrat (5), une sous-couche (4) prévue sur une surface dudit substrat (5), et au moins une caractéristique sensible optiquement imprimée, transférée, appliquée ou autrement prévue sur ladite sous-couche (4), laquelle caractéristique sensible optiquement est produite en utilisant le moyen de production d'effet optique selon l'une quelconque des revendications 1 à 10.

14. Objet selon la revendication 13, dans lequel ladite sous-couche (4) est soit :
- une couche absorbante large bande qui absorbe la majeure partie du spectre visible, telle qu'une couche de couleur foncée, de préférence noire ;
- une couche absorbante à bande étroite qui n'absorbe qu'une partie du spectre visible, telle qu'une couche colorée ; soit
- une couche de réflexion large bande qui réfléchit la majeure partie du spectre visible, telle qu'une couche de couleur claire, de préférence blanche.

15. Objet selon l'une quelconque des revendications 12 à 14, dans lequel une surface exposée de ladite caractéristique sensible optiquement au niveau de l'interface entre l'air et le moyen de support (1) présente une surface sensiblement plate et lisse.

16. Objet selon l'une quelconque des revendications 12 à 15, dans lequel ledit objet est un billet de banque.
